# FASCICULE DE BREVET EUROPEEN

(11) **EP 3 769 015 B1**
(45) Date de publication et mention de la délivrance du brevet: **14.08.2024**
(21) Numéro de dépôt: 19710705.5
(22) Date de dépôt: 19.03.2019
(51) Int. Cl.: F24F 12/00, F24F 11/72, A01K 1/00, A01K 31/18

(54) **DISPOSITIF DE VENTILATION POUR BÂTIMENT D'ÉLEVAGE, NOTAMMENT D'ÉLEVAGE AVICOLE, COMPRENANT UN ÉCHANGEUR DE CHALEUR ET DES MOYENS DE CHAUFFAGE DE L'AIR**
BELÜFTUNGSVORRICHTUNG FÜR TIERZUCHTGEBÄUDE, INSBESONDERE FÜR GEFLÜGEL, MIT EINEM WÄRMETAUSCHER UND LUFTHEIZMITTEL
VENTILATION DEVICE FOR HUSBANDRY BUILDING, IN PARTICULAR POULTRY HUSBANDRY BUILDING, COMPRISING A HEAT EXCHANGER AND AIR HEATING MEANS

(30) Priorité: 23.03.2018 FR 1852535; 27.03.2018 FR 1852632
(43) Date de publication de la demande: 27.01.2021
(73) Titulaire: Lead Leroy Concept, 35530 Noyal Sur Vilaine (FR)
(72) Inventeur: GOBIN, Anthony, 44160 Pontchâteau (FR)
(74) Mandataire: Vidon Brevets & Stratégie
(86) Numéro de dépôt international: PCT/EP2019/056791
(87) Numéro de publication internationale: WO 2019/179992

(56) Documents cités:
- EP-A1- 1 146 292
- EP-A1- 3 032 183
- EP-A2- 3 021 050
- FR-A1- 2 964 448
- FR-A1- 2 978 532
- US-A- 5 123 595

## Description

### 1. Domaine de l'invention

L'invention concerne le domaine de la conception et de la réalisation des équipements destinés à équiper les bâtiments d'élevage, notamment les bâtiments d'élevage avicoles, c'est-à-dire les bâtiments d'élevage de volailles.

Plus précisément, l'invention se rapporte à un dispositif de ventilation équipant de tels bâtiments de type comprenant un échangeur de chaleur de type air-air.

L'invention se rapporte également à un bâtiment d'élevage, avicole notamment, comprenant un tel dispositif, ou plusieurs, et un procédé d'utilisation d'un tel dispositif, ou plusieurs au sein d'un bâtiment d'élevage, avicole notamment.

### 2. Art antérieur

Les bâtiments d'élevage, notamment de volailles, accueillent, pour chaque campagne d'élevage, un nombre important d'animaux.

Ceux-ci doivent être élevées dans une atmosphère saine et à une température relativement élevée.

Par exemple, en ce qui concerne les volailles, cette température est généralement comprise entre 25 °C et 35 °C selon le type et l'âge des volailles.

En outre, dans les élevages avicoles, l'environnement doit toujours être adapté au stade physiologique des animaux.

Ainsi, les besoins en chauffage sont très importants en phase de démarrage de la croissance (ou phase endothermique) du fait que les poussins sont incapables d'assurer leur thermorégulation dans les premiers jours de leur vie. Durant cette phase, un renouvellement de l'air intérieur est également nécessaire.

Le chauffage n'est plus nécessaire à partir d'un certain âge (sauf lorsque la température de l'air extérieur est faible) mais les besoins en ventilation sont importants du fait de la chaleur produite par les animaux (phase exothermique).

Le maintien de la température est donc au rang des préoccupations constantes des éleveurs. En effet, toute baisse ou hausse excessive de température dans un bâtiment d'élevage peut entraîner une surmortalité des animaux. Ce problème est particulièrement sensible avec les volailles.

En outre, une mauvaise ventilation des bâtiments peut aussi entraîner une augmentation du taux d'hygrométrie dans ceux-ci, ce qui est propice à la propagation de micro-organismes ainsi qu'à une augmentation du taux d'ammoniac résultant de la décomposition des déjections. De tels phénomènes peuvent conduire à la nécessité de renouveler les litières sur lesquelles sont élevés les animaux plus souvent mais aussi à une surmortalité de ceux-ci.

Ainsi, pour obtenir un élevage des volailles dans une atmosphère saine et à des températures relativement stables, les bâtiments d'élevage comportent généralement des installations de ventilation dont l'objectif est de faire entrer suffisamment d'air neuf extérieur à l'intérieur du bâtiment, de façon à maintenir une certaine température, renouveler l'air et apporter l'oxygène nécessaire aux volailles, et obtenir des niveaux acceptables d'humidité, de gaz, de poussière et d'odeurs.

La ventilation des bâtiments d'élevage de volailles est réalisée par des extracteurs d'air situés sur un côté du bâtiment et/ou en pignons, qui prennent la forme de ventilateurs d'extraction (assurant une ventilation dynamique par dépression) d'air vicié de l'intérieur vers l'extérieur du bâtiment, et par des trappes d'admission ou d'entrée d'air extérieur réparties sur le ou les côtés opposés du bâtiment et/ou en pignons. Pour les bâtiments de grande largeur, il est connu de mettre en oeuvre des cheminées d'extraction dont l'entretien (nettoyage et désinfection) s'avère fastidieux.

Ce type de système nécessite de créer une dépression suffisante pour générer de la vitesse d'air au niveau des trappes afin d'obtenir une veine d'air remontant vers le faitage du bâtiment de sorte à capter les calories situées au plafond. L'objectif est de réchauffer l'air entrant qui est plus froid que celui du bâtiment pour qu'il ne retombe pas directement sur les animaux, sans créer de la vitesse d'air sur ceux-ci.

Toutefois, ce mode de ventilation oblige un réglage précis des trappes en fonction des conditions atmosphériques et des réglages réguliers des ouvertures dans le temps.

Par ailleurs, dans les cas fréquents où l'intérieur des bâtiments d'élevage doit être chauffé, l'apport d'air extérieur froid par de telles trappes contribue à baisser la température régnant dans le bâtiment et implique un surcoût énergétique pour maintenir celle-ci suffisamment élevée.

Pour atteindre ces objectifs de gestion optimale de l'ambiance, des moyens techniques sont mis en oeuvre : chauffage (tels des radiants à gaz répartis dans le bâtiment), canons à air chaud, ventilation et, depuis quelques années, des dispositifs de récupération de chaleur de type air-air.

Ces dispositifs de récupération de chaleur de type air-air permettent de chauffer de l'air extérieur insufflé dans le bâtiment en récupérant une partie des calories de l'air vicié chaud extrait du bâtiment.

Le document US 5 123 595 A décrit un dispositif de ventilation équipant un bâtiment avicole, comprenant un carter et un bloc échangeur de chaleur, le carter étant muni d'une prise d'air extérieur, d'une sortie d'air réchauffé, d'une prise d'air intérieur et d'une sortie d'air refroidi, le bloc échangeur de chaleur étant apte à mettre en contact thermique un premier flux d'air provenant de la prise d'air extérieur avec un deuxième flux d'air provenant de ladite prise d'air intérieur, le dispositif de ventilation comprenant en outre une sortie d'air annexe disposée sur ledit carter ; et munie d'une trappe manuelle dirigeant l'air du deuxième flux vers le bloc échangeur de chaleur en position fermée ou vers la sortie d'air annexe en position ouverte.

Il est toutefois très difficile d'obtenir de bons résultats d'ambiance et une homogénéité de la température dans le bâtiment lorsque la ventilation et le chauffage sont conçus indépendamment.

En effet, pour garantir une homogénéité de l'ambiance, il faut une cohérence entre la ventilation et le chauffage, et pouvoir assurer une anticipation du renouvellement d'air et du chauffage.

### 3. Objectifs de l'invention

Un objectif de la présente invention est de pallier au moins en partie aux inconvénients de l'art antérieur.

Notamment, un objectif d'au moins un mode de réalisation est de fournir un dispositif permettant de simplifier la gestion de l'ambiance au sein d'un bâtiment d'élevage avicole et d'obtenir une homogénéité de température dans le bâtiment en limitant le surcoût énergétique.

Un autre objectif d'au moins un mode de réalisation de l'invention est fournir un dispositif permettant de chauffer le volume du bâtiment d'élevage avicole et de renouveler l'air en apportant l'oxygène nécessaire aux volailles pour assurer le confort et le bien-être de ces dernières.

Un autre objectif d'au moins un mode de réalisation de l'invention est de fournir un tel dispositif qui puisse être adapté à toutes les phases d'élevage des volailles afin de limiter les coûts de revient, et qui améliore la phase de transition entre les phases endothermique et exothermique.

Un autre objectif d'au moins un mode de réalisation de l'invention est de proposer un tel dispositif qui soit de structure simple, c'est-à-dire avec un nombre de pièces limitées.

Encore un autre objectif d'au moins un mode de réalisation de l'invention est de proposer un tel dispositif qui peut être mis en oeuvre dans différents types d'installations d'élevage hors sol (pour bovins, caprins, porcs, volailles et lapins notamment, mais non exclusivement).

Encore un autre objectif d'au moins un mode de réalisation est de fournir un dispositif qui soit simple d'utilisation et peu coûteux à mettre en oeuvre.

### 4. Exposé de l'invention

Ces objectifs, ainsi que d'autres qui apparaitront dans la suite de la présente description, sont atteints à l'aide d'un dispositif de ventilation selon la revendication indépendante 1, destiné à équiper un bâtiment d'élevage, comprenant un carter et au moins un bloc échangeur de chaleur, le carter étant muni d'une prise d'air extérieur, d'une sortie d'air réchauffé, d'une prise d'air intérieur et d'une sortie d'air refroidi, ledit au moins un bloc échangeur de chaleur étant apte à mettre en contact thermique un premier flux d'air provenant de la prise d'air extérieur, et dirigé vers la sortie d'air réchauffé, avec un deuxième flux d'air provenant de ladite prise d'air intérieur.

Selon l'invention, le dispositif comprend en outre une sortie d'air annexe disposée sur ledit carter, des moyens de chauffage de l'air et des moyens de déviation aptes à diriger ledit deuxième flux d'air entrant à l'endroit de ladite prise d'air intérieur :
- à travers ledit au moins un bloc échangeur vers ladite sortie d'air refroidi selon un premier circuit d'air,
- à travers les moyens de chauffage vers ladite sortie d'air réchauffé selon un deuxième circuit d'air, ou
- directement vers ladite sortie d'air annexe selon un troisième circuit d'air,
   les moyens de déviation comprennent :
   - un premier volet mobile entre une position de fermeture et une position d'ouverture de ladite prise d'air extérieur,
   - un deuxième volet mobile entre une position de fermeture et une position d'ouverture de ladite sortie d'air annexe, et
   - un troisième volet mobile entre une position de fermeture et une position d'ouverture du passage entre ladite prise d'air intérieur et ladite sortie d'air réchauffé.

Le dispositif de ventilation selon la présente invention met en oeuvre un échangeur de chaleur et des moyens de chauffage, et comprend un circuit d'échange de chaleur entre l'air entrant et l'air sortant d'un bâtiment d'élevage avicole intégrant l'échangeur, un circuit d'extraction de l'air intérieur du bâtiment qui ne traverse pas le bloc échangeur et qui peut être utilisé selon les besoins et un circuit de recyclage qui intègre les moyens de chauffage.

La mise en oeuvre de volets mobiles assure la modularité du dispositif en ce sens que ce dernier peut assurer les fonctions d'échange de chaleur seul, d'échangeur de chaleur et de chauffage ou d'extraction, d'extraction seule (si l'hygrométrie du bâtiment est trop basse), ou de chauffage seule.

Le mode de fonctionnement est choisi en fonction des besoins en renouvellement d'air des animaux et de la température du bâtiment.

Le chauffage est de préférence prioritaire et peut être mis en oeuvre de façon progressive ou en "tout ou rien".

En d'autres termes, l'air intérieur vicié du bâtiment extrait par le dispositif peut servir à réchauffer l'air neuf entrant dans le dispositif (et donc dans le bâtiment) et/ou être dirigé directement vers l'extérieur du bâtiment. Il peut également être recyclé.

Le circuit d'extraction du dispositif peut être utilisé indépendamment du circuit d'échange de chaleur ou en complément de ce dernier (pour déshumidifier l'air intérieur dans ce dernier cas).

De ce fait, cela permet de simplifier la gestion de l'ambiance au sein d'un bâtiment d'élevage, notamment d'élevage avicole, et d'obtenir une homogénéité de température dans le bâtiment car il suffit de sélectionner, en fonction de paramètres prédéterminés, tels que la température à l'intérieur du bâtiment et les besoins en renouvellement d'air intérieur, le circuit d'air approprié.

En outre, par cette modularité, on fournit un dispositif qui peut être utilisé au cours des différentes phases d'élevage des volailles.

On assure au cours des phases endothermiques et exothermiques d'élevage le confort et le bien être des volailles.

En outre, l'avantage de mettre un circuit d'extraction du dispositif qui soit utilisé indépendamment du circuit d'échange de chaleur permet d'optimiser la consommation électrique.

En effet, en phase d'extraction, la perte de charge à puissance équivalente s'avère plus faible si le circuit d'extraction est utilisé seul par rapport à un dispositif où il serait obligatoire d'avoir le circuit d'extraction et le circuit d'échange de chaleur qui devraient être utilisés. Par exemple, la diminution de perte de charge dans le cas d'un circuit d'extraction utilisé seul est sensiblement égale à 30% par rapport à un dispositif où il serait obligatoire d'avoir le circuit d'extraction et le circuit d'échange de chaleur utilisés en simultané.

Un autre avantage est qu'un dispositif selon l'invention permet de s'affranchir de moyens de compensation de la perte de charge.

Il est à noter que les volets peuvent par exemple être de type persienne, à obturateur, ou à diaphragme variable.

Selon un aspect particulier de l'invention, le dispositif comprend des moyens de déplacement de chacun desdits volets mobiles entre une position ouverte et une position de fermeture permettant :
- d'ouvrir le deuxième volet mobile et de fermer les premier et troisième volets mobiles dans un mode de fonctionnement dit d'extraction d'air dudit dispositif,
- d'ouvrir le troisième volet mobile et de fermer les premier et deuxième volets mobiles dans un mode fonctionnement dit de recyclage et de chauffage d'air dudit dispositif,
- de fermer le troisième volet mobile et d'ouvrir les premier et deuxième volets mobiles dans un mode fonctionnement dit d'échange de chaleur et d'extraction d'air dudit dispositif,
- de fermer les deuxième et troisième volets mobiles et d'ouvrir le premier volet mobile dans des modes de fonctionnement dit d'échange de chaleur avec ou sans chauffage d'air dudit dispositif.

Selon un aspect d'au moins un mode de réalisation, le dispositif comprend des moyens d'activation/désactivation des moyens de chauffage aptes à activer ces derniers dans le mode de fonctionnement dit d'échange de chaleur avec chauffage du dispositif et dans le mode de fonctionnement dit de recyclage et de chauffage d'air du dispositif.

Selon un autre aspect d'au moins un mode de réalisation, le dispositif comprend des moyens de circulation d'air à travers chacun desdits circuits.

Selon un aspect particulier de l'invention, le dispositif comprend au moins un filtre disposé à l'endroit de la prise d'air intérieur.

Ainsi, par la mise en oeuvre d'au moins un filtre à l'endroit de la prise d'air intérieur, qui permet d'épurer l'air qui provient du bâtiment, on évite que le dispositif de ventilation soit détérioré.

En effet, l'air extrait d'un tel bâtiment d'élevage avicole est chargé en poussières provenant pour une part des litières et pour une autre part des animaux eux-mêmes.

Afin d'éviter que ce poussières ne se déposent en trop grande quantité au sein du dispositif de ventilation et l'encrassent, il peut donc être important de filtrer le deuxième flux d'air.

Selon un mode de réalisation particulier de l'invention, le dispositif comprend en outre des moyens de chauffage à combustion indirecte.

De ce fait, cela permet de pallier aux insuffisances calorifiques s'il est nécessaire de chauffer encore plus le premier flux d'air que ce que le deuxième flux d'air n'apporte en énergie calorifique.

Les moyens de chauffage à combustion indirecte sont relativement simples à mettre en oeuvre au sein d'un tel dispositif et à la fois peu encombrants.

En outre, la mise en oeuvre de moyens de chauffage à combustion indirecte permet de limiter, voire de supprimer, les apports de dioxyde de carbone à l'intérieur du bâtiment.

Enfin, la combustion indirecte permet également, grâce au rejet des gaz brulés, de récupérer partiellement des calories.

Selon un aspect particulier du mode de réalisation précité, les moyens de chauffage à combustion indirecte peuvent être des moyens de chauffage au gaz.

L'invention concerne également un bâtiment d'élevage avicole selon la revendication indépendante 8, comprenant une pluralité de dispositifs de ventilation tels que décrits précédemment, lesdits dispositifs étant disposés sur au moins un côté longitudinal dudit bâtiment, le bâtiment comprenant en outre au moins une turbine ou un ventilateur d'extraction de l'air intérieur située sur au moins un des pignons dudit bâtiment ou sur au moins un côté longitudinal dudit bâtiment.

En mode d'extraction d'air, autrement appelé mode de ventilation pure, le deuxième flux d'air entrant à l'endroit de la prise d'air intérieur est dirigé directement vers la sortie d'air annexe selon le troisième circuit d'air. Une telle direction de ce flux d'air crée une dépression au sein de ce bâtiment d'élevage avicole. Cette dépression est compensée par des trappes d'entrée d'air qui feront rentrer de l'air à l'intérieur du bâtiment de sorte à rééquilibrer la pression.

L'extraction seule peut, par exemple, être utilisée pendant la phase endothermique dans le cas où l'hygrométrie est trop basse.

Selon un mode de réalisation particulier, les dispositifs sont répartis sur les deux côtés longitudinaux du bâtiment, en vis-à-vis ou en quinconce.

Selon un autre mode de réalisation, lesdits dispositifs et plusieurs turbines ou ventilateurs d'extraction sont répartis en alternance sur un côté longitudinal dudit bâtiment.

Le fait de répartir les différents dispositifs sur les côtés du bâtiment de manière uniforme permet de ne pas avoir un réchauffement ou un renouvellement d'air concentré en un point du bâtiment.

Cela favorise par conséquent l'uniformité de l'ambiance intérieure du bâtiment.

En outre, cela permet de ne pas créer de zone dans laquelle la vitesse de flux d'air entrant ou sortant est excessive.

Cela favorise en outre un abaissement de la teneur en ammoniac et de l'humidité de l'air intérieur de manière uniforme.

Selon un aspect particulier de l'invention, le bâtiment comprend en outre un système de régulation comprenant :
- au moins une mémoire de stockage des besoins en renouvellement d'air des animaux en fonction de leur âge,
- au moins un capteur de mesure de la température intérieure dudit bâtiment, et
- une interface de pilotage de chaque dispositif d'échange de chaleur qui sélectionne, en fonction de la température mesurée et des besoins en renouvellement d'air mémorisée, le mode de fonctionnement du dispositif parmi le mode de fonctionnement dit d'extraction d'air, le mode de fonctionnement dit de recyclage et de chauffage d'air, le mode de fonctionnement dit d'échange de chaleur et d'extraction d'air, et les modes de fonctionnement dit d'échange de chaleur avec ou sans chauffage d'air. De cette manière, il est plus facile pour un utilisateur d'un tel bâtiment d'élevage avicole de contrôler les conditions ambiantes d'élevage et ainsi de contrôler le bien être des animaux.

L'invention concerne également un procédé d'utilisation, selon la revendication indépendante 12, d'au moins un dispositif de ventilation tel que décrit précédemment au sein d'un bâtiment d'élevage avicole tel que décrit précédemment, le procédé comprenant les étapes suivantes :
- pendant une première phase d'élevage des animaux, dite phase endothermique, ventilation et chauffage dudit bâtiment à l'aide dudit au moins un dispositif de ventilation ; et
- pendant une deuxième phase d'élevage des animaux, dite phase exothermique, ventilation dudit bâtiment avicole à l'aide de ladite au moins une turbine ou dudit au moins un ventilateur d'extraction, et chauffage dudit bâtiment à l'aide dudit au moins un dispositif de ventilation.

### 5. Liste des Figures

L'invention, ainsi que les différents avantages qu'elle présente, seront plus facilement compris, à la lumière de la description qui va suivre d'un mode de réalisation illustratif et non limitatif de celle-ci, et des dessins annexés parmi lesquels :
- les figures 1 et 2 sont des vues schématiques, en perspective, d'un bâtiment d'élevage avicole mettant en oeuvre plusieurs dispositifs d'échange de chaleur conforme à l'invention, selon deux modes de réalisation ;
- les figures 3 à 8 sont des vues en perspective d'un dispositif de ventilation selon un mode de réalisation de l'invention ;
- la figure 9 est un schéma de principe d'un mode de fonctionnement d'un dispositif de ventilation selon le mode de réalisation illustré sur les figures 3 à 8, et
- la figure 10 est un schéma de principe d'un mode de fonctionnement d'un autre dispositif de ventilation qui ne fait pas partie de l'invention.

### 6. Description détaillée d'un mode de réalisation de l'invention

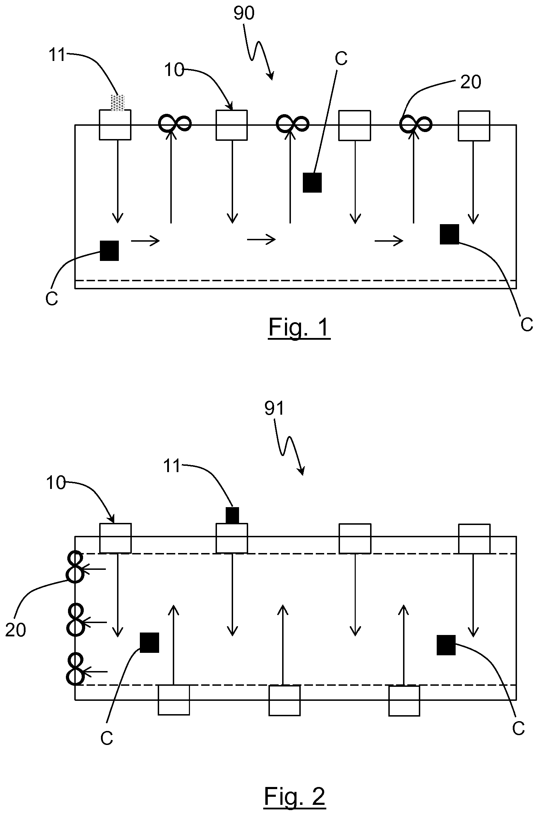

Les figures 1 et 2 illustrent schématiquement un bâtiment d'élevage avicole comprenant une pluralité de dispositifs de ventilation 10 conformes à l'invention répartis le long d'une ou des deux façades longitudinales opposées du bâtiment.

Les dispositifs de ventilation 10 permettent de chauffer de l'air extérieur insufflé dans le bâtiment avec de l'air chaud, plus humide, extrait du bâtiment.

De tels échangeurs permettent de limiter grandement le surcoût énergétique généré par la ventilation du bâtiment d'élevage.

On détaille par la suite un mode de réalisation d'un tel dispositif de ventilation 10.

Chaque dispositif de ventilation 10 du bâtiment d'élevage comprend un carter 1 qui présente une prise d'air extérieur 2 orientée vers l'extérieur du bâtiment, une sortie d'air réchauffé 2a orientée vers l'intérieur du bâtiment, une prise d'air intérieur 3 orientée vers l'intérieur du bâtiment, une sortie d'air refroidi 3a orientée vers l'extérieur du bâtiment, et également une sortie d'air annexe 5 orientée vers l'extérieur du bâtiment.

Le carter 1 comprend un module échangeur et un module de chauffage juxtaposés.

Il comprend aussi des moyens de circulation d'air 7 prenant la forme de deux ventilateurs, un d'extraction et un de soufflage.

Le module échangeur comprenant un ou deux blocs échangeurs 4, en l'occurrence deux dans l'exemple illustré.

Le module de chauffage comprend les moyens de chauffage 8.

Ces blocs d'échange, ou blocs échangeurs, 4 sont apte à mettre en contact thermique un premier flux d'air A provenant de la prise d'air extérieur 2 avec un deuxième flux d'air B provenant de la prise d'air intérieur 3, de sorte à réchauffer le premier flux d'air A par échange calorifique avec le deuxième flux d'air B.

La prise d'air extérieur 2 et la sortie d'air réchauffé 2a forment un circuit de circulation pour le premier flux d'air A, correspondant au flux d'air provenant de l'extérieur au bâtiment qui arrive dans le dispositif de ventilation 10.

Le deuxième flux d'air B, correspondant au flux d'air provenant de l'intérieur du bâtiment qui arrive dans le dispositif de ventilation 10, peut être dirigé dans différents circuits de circulation.

En effet, le deuxième flux d'air B entrant à l'endroit de ladite prise d'air intérieur 3 peut circuler au sein du dispositif de ventilation 10 :
- à travers ledit au moins ledit bloc échangeur 4 vers ladite sortie d'air refroidi 3a selon un premier circuit d'air C1,
- à travers les moyens de chauffage 8 vers ladite sortie d'air réchauffé 2a selon un deuxième circuit d'air C2, ou
- directement vers ladite sortie d'air annexe 5 selon un troisième circuit d'air C3.

En d'autres termes, le deuxième flux d'air B peut soit emprunter le premier circuit d'air C1 pour réchauffer le premier flux d'air A entrant puis sortir du dispositif de ventilation 10 sans retourner dans le bâtiment, soit emprunter le deuxième circuit d'air C2 pour être réchauffé et retourner dans le bâtiment, soit emprunter le troisième circuit d'air C3 pour être directement évacué du dispositif ventilation 10 sans retourner dans le bâtiment et sans réchauffer le premier flux d'air A.

Ainsi, le deuxième flux d'air B provenant de la prise d'air intérieur 3 est dirigé soit vers la sortie d'air refroidi 3a, soit vers la sortie d'air annexe 5, soit vers la sortie d'air réchauffé 2a.

Il est à noter que, lorsque le deuxième flux d'air B est dirigé en totalité vers la sortie d'air annexe 5, il ne passe pas au travers des blocs d'échange 4, mais se dirige directement vers l'extérieur du dispositif ventilation 10. Dans ce cas de figure, il ne réchauffe donc pas le premier flux d'air A provenant de l'extérieur.

Cette redirection s'effectue par le biais des moyens de déviation, prenant ici la forme de volets ou de trappes 6a, 6b, 6c mobiles pilotées par des moteurs et qui sont aptes à diriger le deuxième flux d'air B provenant de la prise d'air intérieur 3 vers la sortie d'air refroidi 3a, la sortie d'air annexe 5 ou la sortie d'air réchauffé 2a.

Le fait le deuxième flux d'air B soit dirigé en totalité vers la sortie d'air annexe 5, ne doive pas passer au travers des blocs d'échange 4 permet de limiter la perte de charge.

En effet, à puissance équivalente la perte de charge s'avère plus faible si le flux d'air ne rencontre pas d'obstacles supplémentaires lors de sa sortie. Par exemple, la diminution de perte de charge dans le cas d'un flux d'air dirigé en totalité vers la sortie d'air annexe 5 par rapport à un flux d'air devant passer au travers des blocs d'échange 4 est sensiblement égale à 30%.

A titre illustratif, à puissance égale de ventilation, le débit d'un dispositif avec un deuxième flux d'air B dirigé en totalité vers la sortie d'air annexe 5 serait de l'ordre de 3700m³ par heure contre 2500 m³ par heure pour un flux d'air devant passer au travers des blocs d'échange 4.

Dans ce mode de réalisation, le dispositif de ventilation 10 comprend des moyens de déplacement de chacun desdits volets mobiles 6a, 6b, 6c entre une position ouverte et une position de fermeture permettant :
- d'ouvrir le deuxième volet mobile 6b et de fermer les premier 6a et troisième 6c volets mobiles dans un mode de fonctionnement dit d'extraction d'air dudit dispositif de ventilation 10,
- d'ouvrir le troisième volet mobile 6c et de fermer les premier 6a et deuxième 6b volets mobiles dans un mode fonctionnement dit de recyclage et de chauffage d'air dudit dispositif de ventilation 10,
- de fermer le troisième volet mobile 6c et d'ouvrir les premier 6a et deuxième 6b volets mobiles dans un mode fonctionnement dit d'échange de chaleur et d'extraction d'air dudit dispositif de ventilation 10,
- de fermer les deuxième 6b et troisième 6c volets mobiles et d'ouvrir le premier 6a volet mobile dans des modes de fonctionnement dit d'échange de chaleur avec ou sans chauffage d'air dudit dispositif de ventilation 10.

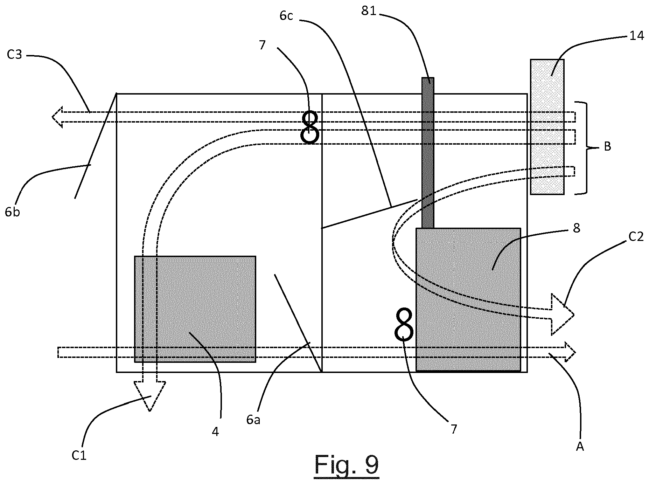

En d'autres termes, comme illustré notamment en figure 9 :
- dans un mode d'extraction d'air, le deuxième flux d'air B emprunte le troisième circuit d'air C3 formé dans le dispositif de ventilation dans lequel le deuxième volet mobile 6b est ouvert et les premier 6a et troisième 6c volets mobiles sont fermés ;
- dans un mode de recyclage et de chauffage d'air, le deuxième flux d'air B emprunte le deuxième circuit d'air C2 formé dans le dispositif de ventilation dans lequel le troisième volet mobile 6c est ouvert et les premier 6a et deuxième 6b volets mobiles sont fermés ;
- dans un mode d'échange de chaleur et d'extraction d'air, le deuxième flux d'air B emprunte le premier circuit d'air C1 formé par le dispositif de ventilation dans lequel le troisième volet mobile 6c est fermé et les premier 6a et deuxième 6b volets mobiles sont ouverts, tandis que le premier flux d'air A circule dans le dispositif de ventilation selon le chemin prévu ;
- dans un mode d'échange de chaleur avec ou sans chauffage d'air, le deuxième flux d'air B emprunte le premier circuit d'air C1 formé par le dispositif de ventilation dans lequel le premier volet mobile 6a est ouvert et les deuxième 6b et troisième 6c volets mobiles sont fermés, tandis que le premier flux d'air A circule dans le dispositif de ventilation selon le chemin prévu.

Selon une variante de réalisation, les moyens de déviation peuvent par exemple prendre la forme de vannes configurées pour répartir le deuxième flux d'air B selon des proportions voulues entre la sortie d'air refroidie 3a, la sortie d'air réchauffé 2a, et la sortie annexe 5.

Par exemple, une telle répartition peut être définie pour réchauffer le premier flux d'air A à une température donnée avant qu'il ne pénètre dans le bâtiment, la quantité de deuxième flux d'air B qui n'est pas nécessaire pour obtenir ladite température définie étant alors redirigée vers la sortie d'air annexe 5.

Il est à noter que, dans ce mode de réalisation, le dispositif de ventilation 10 comprend un filtre 14 disposé à l'endroit de la prise d'air intérieur 3.

En effet, l'air extrait du bâtiment d'élevage avicole par la prise d'air intérieur 3 étant chargé en poussières, provenant notamment de la litière sur laquelle les animaux évoluent, mais également des animaux eux-mêmes (des plumes ou du duvet par exemple), il peut être souhaitable pour le bon fonctionnement du dispositif de ventilation 10 et pour limiter les coûts de maintenance que ces poussières ne se déposent pas en trop grande quantité sur les blocs échangeur 4.

Il est souhaitable aussi que ces poussières ne viennent pas s'accumuler et, par exemple, obstruer des passages d'air.

Le filtre 14 disposé à l'endroit de la prise d'air intérieur 3 permet donc d'épurer l'air provenant du bâtiment peu après l'entrée dans le dispositif 10 de ventilation et donc de limiter les risques d'accumulation de poussières dans le dispositif de ventilation 10 et d'encrassement des blocs échangeur 4.

Ce filtre 14 peut, par exemple, être amovible de sorte qu'il puisse être régulièrement démonté et nettoyé, ou changé.

On pourrait également prévoir des modes de réalisation dans lesquels plusieurs filtres sont placés les uns à la suite des autres de sorte à limiter davantage le risque d'intrusion de poussières dans le dispositif de ventilation 10.

On pourrait aussi prévoir un ou plusieurs filtres placés à l'endroit de la prise d'air extérieur 2 de sorte à épurer également l'air provenant de l'extérieur et qui pourrait, par exemple, être chargé en poussières, ou d'autres particules non souhaitées.

De tels filtres pourraient permettre d'éviter un encrassement des blocs échangeur 4 mais également de limiter le risque de propagation d'éléments indésirables, telles que des bactéries, à l'intérieur du bâtiment lorsque ce premier flux d'air A pénétrera, après son passage dans le dispositif de ventilation 10, dans le bâtiment d'élevage avicole.

Dans ce mode de réalisation, les moyens de chauffage 8 du dispositif 10 de ventilation 10 sont des moyens de chauffage à combustion indirecte.

Ces moyens de chauffage à combustion indirecte ont l'avantage, par rapport à des moyens de chauffage à combustion directe, de ne pas provoquer d'apport de CO2 à l'intérieur du bâtiment d'élevage avicole, ce qui serait de manière évidente néfaste pour les volailles élevées à l'intérieur.

En outre, de tels moyens de chauffage ont l'avantage, par rapport aux batteries à eau chaude par exemple, de présenter des dimensions relativement réduites.

Dans ce mode de réalisation, les moyens de chauffage à combustion indirecte fonctionnent au gaz.

La technologie au gaz offre en effet une réactivité intéressante pour un coût raisonnable et nécessite des moyens de mise en oeuvre simples.

Les moyens de chauffage à combustion indirecte comprennent, dans ce mode de réalisation, une cheminée 81 permettant de rejeter les gaz brulés.

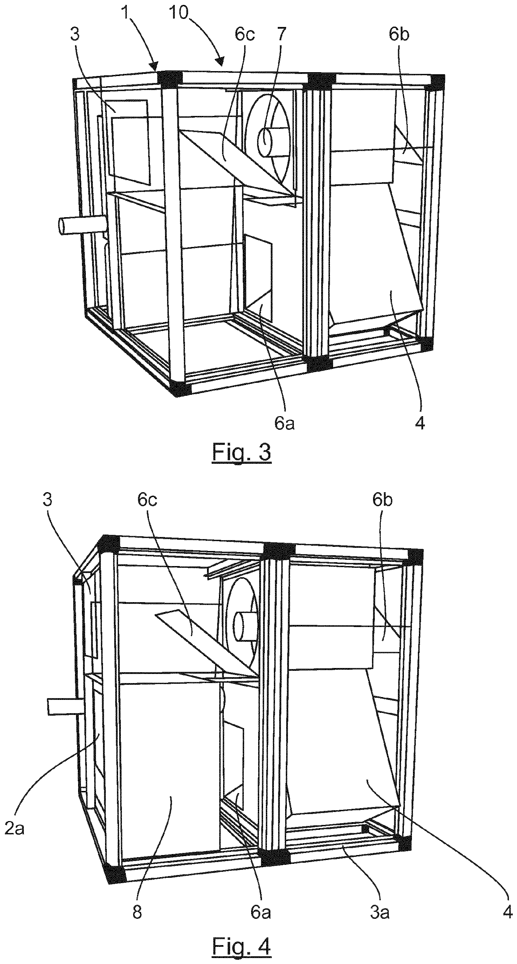

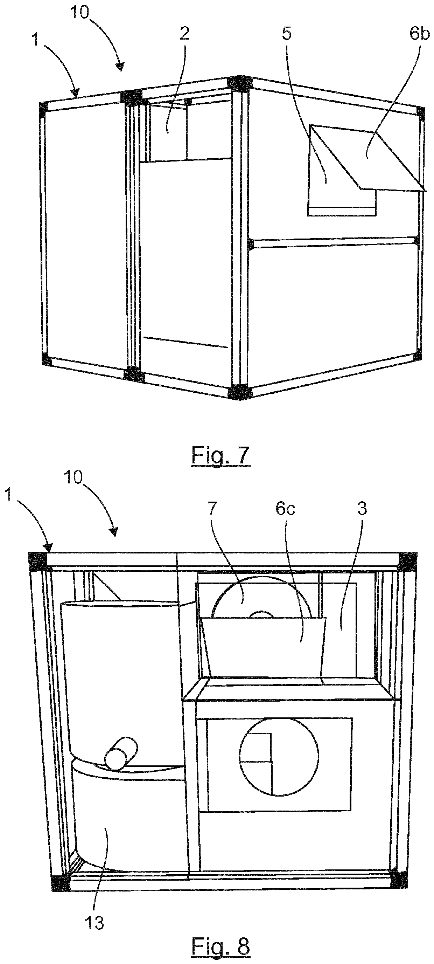

On détaille, ci-après en relation avec les figures 3 à 8, les caractéristiques géométriques d'un dispositif de ventilation 10 conforme à l'invention.

Dans ce dispositif de ventilation 10, les moyens de chauffage 8, de forme parallélépipédique, sont placés sensiblement au centre du dispositif. Sur le dessus de cette unité de chauffage, une cheminée 81 d'extraction des gaz brûlés est ménagée.

Cette cheminée 81 d'extraction passe « au travers » de la prise d'air intérieur 3 qui est donc formée dans le carter 1 et placée au dessus des moyens 8 de chauffage à combustion indirecte.

Au niveau de la face avant des moyens de chauffage 8, la sortie d'air réchauffé 2a est formée dans le carter 1. La prise d'air extérieur 2 est quant à elle formée sur le carter 1 au niveau d'une face des blocs échangeur 4.

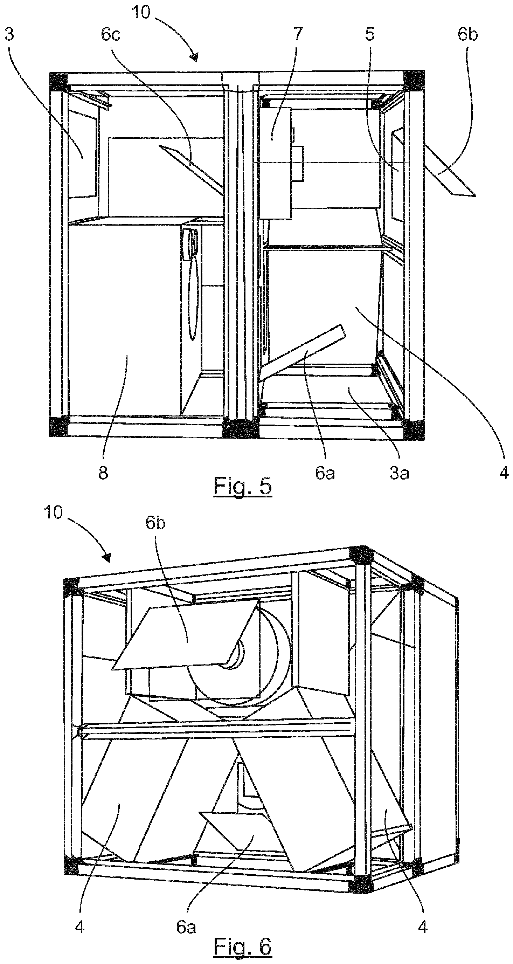

Ces blocs échangeur 4 sont placés dans le dispositif de part et d'autre des moyens de chauffage 8 à combustion indirecte (figure 6).

Le premier flux d'air A arrive ainsi dans le dispositif de ventilation 10 par la prise d'air extérieur 2 et traverse les blocs échangeur 4 pour ensuite ressortir par la sortie d'air réchauffé 2a en direction de l'intérieur du bâtiment. Avant de ressortir par la sortie d'air réchauffé 2a, le premier flux d'air A traverse le volet mobile 6a ouvert ainsi que les moyens de chauffage 8 à combustion indirecte qui, lorsqu'ils sont allumés, permettent d'apporter des calories supplémentaires et donc de réchauffer le premier flux d'air A amené dans le bâtiment.

Pour sa part, le deuxième flux d'air B provient de la prise d'air intérieur 3 et, selon la configuration de ces moyens de déviation, se dirige vers l'un des trois circuits prévus.

Un tel dispositif de ventilation 10 peut, en pratique, traiter des débits d'air compris entre 1 et 4000 m³ par heure.

Dans ce mode de réalisation, le dispositif de ventilation 10 présente une longueur de l'ordre de 1,60 mètre pour une hauteur de l'ordre de 1,50 mètre et une épaisseur de l'ordre de 1,60 mètre.

On pourrait toutefois mettre en oeuvre des dispositifs présentant des dimensions différentes convenant à l'échange de chaleur au sein d'un bâtiment d'élevage avicole.

Comme décrit précédemment, en appui avec les figures 1 et 2, le bâtiment d'élevage peut adopter plusieurs configurations selon les besoins des utilisateurs, notamment en termes de climatisation ou selon le type d'animaux présents.

La figure 1 illustre un mode de réalisation d'un bâtiment d'élevage dans lequel les dispositifs de ventilation 10 sont répartis sur un côté longitudinal du bâtiment 90 en alternance avec des ventilateurs d'extraction 20.

Dans ce mode de réalisation, les trappes d'entrée d'air (illustrées en traits interrompus) sont placées sur le côté longitudinal opposé du bâtiment, c'est-à-dire en face des dispositifs de ventilation de sorte à mettre en oeuvre une ventilation dite en latéral.

La figure 2 illustre un mode de réalisation d'un bâtiment d'élevage dans lequel les dispositifs de ventilation 10 et les trappes d'entrée d'air (illustrées en traits interrompus) sont répartis sur deux côtés longitudinaux du bâtiment 91. Dans ce cas de figure, des turbines d'extraction 20 sont placés sur au moins un des pignons du bâtiment de sorte à mettre en oeuvre une ventilation dite ventilation en bi-latéral et longitudinal.

Ici, les dispositifs de ventilation 10 sont placés en quinconce. On pourrait toutefois imaginer un mode de réalisation dans lequel les dispositifs sont placés en vis-à-vis.

Cette répartition des dispositifs de ventilation permet de chauffer le volume entier du bâtiment de manière homogène et ainsi d'obtenir une uniformité de température et d'ambiance au sein du bâtiment.

En outre, le fait que les puissances de ventilation et de réchauffement soient réparties sur toute la longueur du bâtiment permet de ne pas avoir un gros débit d'air concentré en un point mais au contraire une répartition homogène des débits d'air dans le bâtiment, sans provoquer d'inconfort pour les volailles.

Par conséquent, avec un nombre de dispositifs de ventilation adéquat dans le bâtiment en rapport au nombre d'animaux présents, toute la phase de ventilation endothermique peut se faire avec les dispositifs d'échange situés sur le ou les côtés du bâtiment (phase pendant laquelle il est nécessaire de chauffer le bâtiment - c'est-à-dire lorsque les animaux ne produisent pas assez de chaleur).

Ensuite, il est plus simple de gérer la ventilation nécessaire pour gérer la température avec les turbines d'extraction situées aux pignons du bâtiment (figure 2) pour créer de la vitesse d'air sur les animaux (phase exothermique)

Le passage de la ventilation bi-latérale à la ventilation longitudinale (figure 2) est moins risqué lorsque les animaux sont emplumés et qu'il n'y a plus besoin de chauffage.

Toutefois, si la ventilation longitudinale a démarré et que la nuit la température chute, les dispositifs de ventilation peuvent être utilisés sans perturber la ventilation.

Dans chacun des deux modes de réalisation, les trappes sont représentées en pointillés.

Le bâtiment d'élevage avicole présente en outre un au moins un système de régulation 11 comprenant :
- un microprocesseur et une mémoire de stockage stockant notamment les besoins en renouvellement d'air des volailles en fonction de leur âge notamment,
- une pluralité de capteurs C de mesure de la température intérieure du bâtiment, et
- une interface de pilotage d'un boîtier de commande associé à chaque dispositif de ventilation qui sélectionne le mode de fonctionnement du dispositif de ventilation correspondant parmi les cinq possibles, en jouant sur les volets, les moyens de circulation d'air et les moyens de chauffage.

Avec ce système de régulation 11, il est possible de surveiller en continu la température à l'intérieur du bâtiment grâce aux capteurs C de mesure de la température, et d'y apporter la réponse adéquate en termes de chauffage et de débit d'air, en fonction de la température mesurée par les capteurs C (figure 1) et des besoins en renouvellement d'air (et donc d'oxygène) des animaux respectivement.

En effet, dans le cas ou là température intérieure mesurée est inférieure à la température voulue, l'interface de pilotage peut commander les volets 6a, 6b, 6c de chaque dispositif de ventilation pour diminuer la quantité de deuxième flux d'air B qui ressort par la sortie d'air annexe 5 et augmenter la quantité de deuxième flux d'air B qui ressort par la sortie d'air refroidie après être passée par le bloc échangeur 4.

L'interface de pilotage peut également être adaptée pour mettre en marche les moyens de chauffage à combustion indirecte de sorte à apporter de l'énergie calorifique supplémentaire.

Dans le cas où la température intérieure mesurée est supérieure à la température voulue, l'interface de pilotage peut, au contraire de précédemment, commander les volets 6a, 6b, 6c pour diminuer la quantité de deuxième flux d'air B qui ressort par la sortie d'air refroidi et donc augmenter la quantité de deuxième flux d'air B qui ressort par la sortie d'air annexe 5.

Le système de régulation 11 centralise l'ensemble des données collectées par les capteurs de mesure de la température intérieure du bâtiment et peut piloter tout ou partie des dispositifs de ventilation équipant le bâtiment pour augmenter ou diminuer la température intérieure (si les conditions sont satisfaisantes, le système peut maintenir les réglages existants) en jouant sur le chauffage et la ventilation.

Un tel système de régulation permet de garantir une homogénéité de l'ambiance au sein du bâtiment en assurant une cohérence entre la ventilation du bâtiment et le chauffage du bâtiment, et garantit une valeur de température souhaitée au sein du bâtiment à un instant donné.

Il permet d'apporter une réponse rapide si la température intérieure n'est pas satisfaisante, voire même d'anticiper le renouvellement d'air et le chauffage.

On pourrait prévoir dans une variante que le système de régulation 11 comprenne une interface de commande indépendante pour chacun des dispositifs de ventilation 10.

On pourrait en outre prévoir des modes de réalisation dans lesquels le système de régulation 11 mesure et régule d'autres paramètres du bâtiment, tels que l'hygrométrie, la teneur en CO2, la pression, ou tout autre paramètre utile au maintien d'une ambiance optimale pour l'élevage des volailles.

On pourrait aussi prévoir d'autres modes de réalisation dans lesquels le système de régulation comprendrait un unique capteur C de mesure de la température intérieure du bâtiment.

On décrit maintenant le procédé d'utilisation d'au moins un dispositif d'échange de chaleur tel que décrit précédemment au sein du bâtiment d'élevage avicole de la figure 2, par exemple, le procédé comprenant les étapes suivantes :
- pendant une première phase d'élevage des animaux, dite phase endothermique, ventilation et chauffage dudit bâtiment à l'aide dudit au moins un dispositif de ventilation 10, et
- pendant une deuxième phase d'élevage des animaux, dite phase exothermique, ventilation dudit bâtiment avicole à l'aide de ladite au moins une turbine d'extraction 20 et chauffage dudit bâtiment à l'aide dudit au moins un dispositif de ventilation 10.

Ainsi, lors de la première phase de démarrage de la croissance des volailles, appelée aussi phase endothermique, les besoins en chauffage sont très importants du fait que les poussins sont incapables d'assurer leur thermorégulation dans les premiers jours de leur vie. Le procédé selon l'invention permet donc, durant cette phase, d'assurer un renouvellement de l'air intérieur et le maintien d'une température intérieure adéquate. Les dispositifs de ventilation 10 assurent une ventilation minimale sans vitesse d'air excessive sur les animaux.

Lors de la deuxième phase d'élevage des animaux, le chauffage n'est plus nécessaire (sauf lorsque la température de l'air extérieur est basse, ce qui peut être le cas la nuit) mais les besoins en ventilation sont importants du fait de la chaleur produite par les volailles. On utilise alors la ou les turbines d'extraction situées aux pignons du bâtiment, et on chauffe en cas de besoin l'air intérieur (lorsque la température de l'air la première phase d'élevage qui est la plus délicate, le procédé comprend les étapes successives suivantes :
- réception par ledit système de régulation 11 d'au moins une information de température intérieure du bâtiment mesurée par ledit au moins un capteur C de température ;
- en fonction de ladite au moins une information de température reçue et des besoins en renouvellement d'air mémorisés dans des moyens de stockage, envoi par ledit système de régulation 11 d'une commande de réglage des moyens de déviation dudit au moins un dispositif de ventilation 10, de sorte à diriger ledit deuxième flux d'air B entrant à l'endroit de ladite prise d'air intérieur 3 vers ladite sortie d'air refroidi 3a ou ladite sortie d'air annexe 5 ou la sortie d'air réchauffé 2a

De sorte à mettre en oeuvre le procédé tel que décrit précédemment, l'invention concerne également un produit programme d'ordinateur, comprenant des instructions de code de programme pour la mise en oeuvre du procédé lorsque ledit programme est exécuté sur un ordinateur.

L'invention concerne également le médium de stockage lisible par ordinateur et non transitoire, stockant un programme d'ordinateur comprenant un jeu d'instructions exécutables par un ordinateur ou un processeur pour mettre en oeuvre le procédé précité.

On note que le dispositif de l'invention peut être utilisé en pré-chauffage du bâtiment avant l'arrivée des poussins de sorte à amener la température intérieure à une valeur de l'ordre de 34°C par exemple.

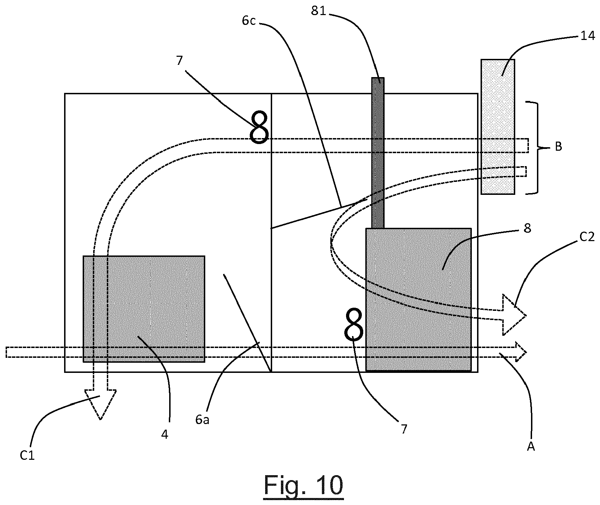

La figure 10 est un schéma de principe d'un mode de fonctionnement d'un autre dispositif de ventilation 10 qui ne fait pas partie de l'invention.

Ce dernier se distingue de celui précédemment décrit en ce qu'il ne met pas en oeuvre de deuxième volet 6b mobile, ni de sortie d'air annexe 5 (il n'est donc pas prévu de troisième circuit d'air C3).

Un ventilateur d'extraction indépendant du dispositif de ventilation 10 peut être prévu dans le bâtiment.

Ce dispositif de ventilation 10, destiné à équiper un bâtiment d'élevage, comprend un carter 1 et au moins un bloc échangeur 4 de chaleur, le carter 1 étant muni d'une prise d'air extérieur 2, d'une sortie d'air réchauffé 2a, d'une prise d'air intérieur 3 et d'une sortie d'air refroidi 3a, ledit au moins un bloc échangeur 4 de chaleur étant apte à mettre en contact thermique un premier flux A d'air provenant de la prise d'air extérieur 2 avec un deuxième flux B d'air provenant de ladite prise d'air intérieur 3.

Le dispositif de ventilation 10 comprend en outre des moyens de chauffage 8 de l'air et des moyens de déviation aptes à diriger ledit deuxième flux d'air B entrant à l'endroit de ladite prise d'air intérieur 3 :
- à travers ledit au moins ledit bloc échangeur 4 vers ladite sortie d'air refroidi 3a selon un premier circuit d'air C1, ou
- à travers les moyens de chauffage 8 vers ladite sortie d'air réchauffé 2a selon un deuxième circuit d'air C2.

Les moyens de déviation comprennent :
- un volet 6a mobile entre une position de fermeture et une position d'ouverture de ladite prise d'air extérieur (2),
- un autre volet 6c mobile entre une position de fermeture et une position d'ouverture du passage entre ladite prise d'air intérieur 3 et ladite sortie d'air réchauffé 2a.

Le dispositif de ventilation 10 comprend des moyens de déplacement de chacun desdits volets mobiles 6a, 6c entre une position ouverte et une position de fermeture permettant :
- d'ouvrir le volet mobile 6c et de fermer le volet mobile 6a dans un mode fonctionnement dit de recyclage et de chauffage d'air dudit dispositif de ventilation 10,
- de fermer le volet mobile 6c et d'ouvrir le volet mobile 6a dans des modes de fonctionnement dit d'échange de chaleur avec ou sans chauffage d'air dudit dispositif de ventilation 10.

Le dispositif de ventilation 10 comprend des moyens d'activation/désactivation des moyens de chauffage 8 aptes à activer ces derniers dans le mode de fonctionnement dit d'échange de chaleur avec chauffage dudit dispositif de ventilation 10 et dans le mode de fonctionnement dit de recyclage et de chauffage d'air dudit dispositif de ventilation 10.

Un tel dispositif de ventilation 10 peut comprendre au moins un filtre 14 disposé à l'endroit de la prise d'air intérieur 3.

## Revendications

1. Dispositif de ventilation (10), destiné à équiper un bâtiment d'élevage (90, 91), comprenant un carter (1) et au moins un bloc échangeur (4) de chaleur, le carter (1) étant muni d'une prise d'air extérieur (2), d'une sortie d'air réchauffé (2a), d'une prise d'air intérieur (3) et d'une sortie d'air refroidi (3a),
ledit au moins un bloc échangeur (4) de chaleur étant apte à mettre en contact thermique un premier flux (A) d'air provenant de la prise d'air extérieur (2), et dirigé vers la sortie d'air réchauffé (2a), avec un deuxième flux (B) d'air provenant de ladite prise d'air intérieur (3),
le dispositif de ventilation (10) comprenant en outre une sortie d'air annexe (5) disposée sur ledit carter (1), des moyens de chauffage (8) de l'air et des moyens de déviation aptes à diriger ledit deuxième flux d'air (B) entrant à l'endroit de ladite prise d'air intérieur (3) :
- à travers ledit au moins un bloc échangeur (4) vers ladite sortie d'air refroidi (3a) selon un premier circuit d'air (C1),
- à travers un passage vers les moyens de chauffage (8) et ladite sortie d'air réchauffé (2a) selon un deuxième circuit d'air (C2), ou
- directement vers ladite sortie d'air annexe (5) selon un troisième circuit d'air (C3) lesdits moyens de déviation comprenant :
- un premier volet (6a) mobile entre une position de fermeture et une position d'ouverture de ladite prise d'air extérieur (2),
- un deuxième volet (6b) mobile entre une position de fermeture et une position d'ouverture de ladite sortie d'air annexe (5), et
- un troisième volet (6c) mobile entre une position de fermeture et une position d'ouverture du passage entre ladite prise d'air intérieur (3) et ladite sortie d'air réchauffé (2a).

2. Dispositif de ventilation (10) selon la revendication 1, **caractérisé en ce qu'**il comprend des moyens de déplacement de chacun desdits volets mobiles (6a, 6b, 6c) entre une position ouverte et une position de fermeture permettant :
- d'ouvrir le deuxième volet mobile (6b) et de fermer les premier (6a) et troisième (6c) volets mobiles dans un mode de fonctionnement dit d'extraction d'air dudit dispositif de ventilation (10),
- d'ouvrir le troisième volet mobile (6c) et de fermer les premier (6a) et deuxième (6b) volets mobiles dans un mode fonctionnement dit de recyclage et de chauffage d'air dudit dispositif de ventilation (10),
- de fermer le troisième volet mobile (6c) et d'ouvrir les premier (6a) et deuxième (6b) volets mobiles dans un mode fonctionnement dit d'échange de chaleur et d'extraction d'air dudit dispositif de ventilation (10),
- de fermer les deuxième (6b) et troisième (6c) volets mobiles et d'ouvrir le premier (6a) volet mobile dans des modes de fonctionnement dit d'échange de chaleur avec ou sans chauffage d'air dudit dispositif de ventilation (10).

3. Dispositif de ventilation (10) selon la revendication 2, **caractérisé en ce qu'**il comprend des moyens d'activation/désactivation des moyens de chauffage (8) aptes à activer ces derniers dans le mode de fonctionnement dit d'échange de chaleur avec chauffage dudit dispositif de ventilation (10) et dans le mode de fonctionnement dit de recyclage et de chauffage d'air dudit dispositif de ventilation (10).

4. Dispositif de ventilation (10) selon l'une des revendications 1 à 3, **caractérisé en ce qu'**il comprend des moyens (7) de circulation d'air à travers chacun desdits circuits.

5. Dispositif de ventilation (10) selon l'une des revendications 1 à 4, **caractérisé en ce qu'**il comprend au moins un filtre (14) disposé à l'endroit de la prise d'air intérieur (3).

6. Dispositif de ventilation (10) selon l'une quelconque des revendications 1 à 5, **caractérisé en ce que** les moyens de chauffage (8) comprennent des moyens de chauffage à combustion indirecte.

7. Dispositif de ventilation (10) selon la revendication 6, **caractérisé en ce que** les moyens de chauffage (8) à combustion indirecte comprennent des moyens (13) de chauffage au gaz.

8. Bâtiment (90, 91) d'élevage avicole comprenant une pluralité de dispositifs de ventilation (10) de ventilation selon l'une des revendications 1 à 7, lesdits dispositifs étant disposés sur au moins un côté longitudinal dudit bâtiment (90, 91), le bâtiment comprenant en outre au moins une turbine ou ventilateur d'extraction (20) de l'air intérieur située sur au moins un des pignons dudit bâtiment ou sur au moins un côté longitudinal dudit bâtiment.

9. Bâtiment (91) d'élevage avicole selon la revendication 8, **caractérisé en ce que** lesdits dispositifs de ventilation (10) sont répartis sur les deux côtés longitudinaux du bâtiment, en vis-à-vis ou en quinconce.

10. Bâtiment d'élevage avicole selon la revendication 8, **caractérisé en ce que** lesdits dispositifs de ventilation (10) et plusieurs turbines ou ventilateurs d'extraction (20) sont répartis en alternance sur un côté longitudinal dudit bâtiment.

11. Bâtiment d'élevage avicole selon l'une des revendications 8 à 10, comprenant une pluralité de dispositifs de ventilation (10) selon la revendication 2 et éventuellement l'une des revendications 3 à 7, présentant en outre un système de régulation (11) comprenant :
- au moins une mémoire de stockage des besoins en renouvellement d'air des animaux en fonction de leur âge,
- au moins un capteur de mesure (C) de la température intérieure dudit bâtiment, et
- une interface de pilotage de chaque dispositif de ventilation (10) qui sélectionne, en fonction de la température mesurée et des besoins en renouvellement d'air, le mode de fonctionnement du dispositif de ventilation (10) parmi le mode de fonctionnement dit d'extraction d'air, le mode de fonctionnement dit de recyclage et de chauffage d'air, le mode de fonctionnement dit d'échange de chaleur et d'extraction d'air, et les modes de fonctionnement dit d'échange de chaleur avec ou sans chauffage d'air.

12. Procédé d'utilisation d'au moins un dispositif de ventilation (10) selon l'une des revendications 1 à 7 au sein d'un bâtiment (90, 91) d'élevage avicole selon l'une des revendications 8 à 11, le procédé comprenant les étapes suivantes :
- pendant une première phase d'élevage des animaux, dite phase endothermique, ventilation et chauffage dudit bâtiment à l'aide dudit au moins un dispositif de ventilation (10) ; et
- pendant une deuxième phase d'élevage des animaux, dite phase exothermique, ventilation dudit bâtiment avicole à l'aide de ladite au moins une turbine ou dudit au moins un ventilateur d'extraction (20), et chauffage dudit bâtiment à l'aide dudit au moins un dispositif de ventilation (10).

## Patentansprüche

1. Lüftungsvorrichtung (10), die zur Ausstattung eines Viehzuchtgebäudes (90, 91) bestimmt ist, mit einem Gehäuse (1) und mindestens einem Wärmetauscherblock (4), wobei das Gehäuse (1) mit einem Außenlufteinlass (2), einem Auslass für erwärmte Luft (2a) versehen ist, einem Innenlufteinlass (3) und einem Kühlluftauslass (3a), wobei der mindestens eine Wärmetauscherblock (4) geeignet ist, einen ersten Luftstrom (A), der von dem Außenlufteinlass (2) kommt und zu dem Kühlluftauslass (2a) gerichtet ist, mit einem zweiten Luftstrom (B) aus dem Innenlufteinlass (3) in Wärmekontakt zu bringen, wobei die Lüftungsvorrichtung (10) außerdem einen Nebenluftauslass (5) aufweist, der an dem Gehäuse (1) angeordnet ist, Mittel zum Heizen (8) der Luft und Umlenkmittel, die geeignet sind, den an der Stelle des Innenlufteinlasses (3) eintretenden zweiten Luftstrom (B) wie folgt zu lenken:
- durch den mindestens einen Wärmetauscherblock (4) zu dem Ausgang der gekühlten Luft (3a) gemäß einem ersten Luftkreislauf (C1),
- durch einen Durchgang zu den Heizmitteln (8) und dem Auslass der erwärmten Luft (2a) gemäß einem zweiten Luftkreislauf (C2), oder
- direkt zu dem Nebenluftauslass (5) gemäß einem dritten Luftkreislauf (C3), wobei die Umleitungsmittel umfassen:
- eine erste Klappe (6a), die zwischen einer Schließstellung und einer Öffnungsstellung des Außenlufteinlasses (2) beweglich ist,
- eine zweite Klappe (6b), die zwischen einer Schließstellung und einer Öffnungsstellung des Nebenluftauslasses (5) beweglich ist, und
- eine dritte Klappe (6c), die zwischen einer Schließstellung und einer Öffnungsstellung des Durchgangs zwischen dem Innenlufteinlass (3) und dem Auslass für erwärmte Luft (2a) beweglich ist.

2. Lüftungsvorrichtung (10) nach Anspruch 1, **dadurch gekennzeichnet, dass** sie Mittel zum Bewegen jeder der beweglichen Klappen (6a, 6b, 6c) zwischen einer offenen Stellung und einer geschlossenen Stellung aufweist, die es ermöglichen:
- die zweite bewegliche Klappe (6b) zu öffnen und die erste (6a) und dritte (6c) bewegliche Klappe zu schließen, in einem Betriebsmodus der Lüftungsvorrichtung (10), der als Absaugung von Luft bezeichnet wird,
- die dritte bewegliche Klappe (6c) zu öffnen und die erste (6a) und zweite (6b) bewegliche Klappe zu schließen, in einem Betriebsmodus der Lüftungsvorrichtung (10), der als Umwälzung und Erwärmung von Luft bezeichnet wird,
- die dritte bewegliche Klappe (6c) zu schließen und die erste (6a) und zweite (6b) bewegliche Klappe in einem Betriebsmodus der Belüftungsvorrichtung (10) zu öffnen, der als Wärmeaustausch und Absaugung von Luft bezeichnet wird,
- die zweite (6b) und dritte (6c) bewegliche Klappe zu schließen und die erste (6a) bewegliche Klappe zu öffnen, in Betriebsmodi der Lüftungsvorrichtung (10), die als Wärmeaustausch mit oder ohne Erwärmung von Luft bezeichnet werden.

3. Lüftungsvorrichtung (10) nach Anspruch 2, **dadurch gekennzeichnet, dass** sie Mittel zur Aktivierung/Deaktivierung der Heizmittel (8) umfasst, die geeignet sind, letztere in dem als Wärmeaustausch mit Erwärmung bezeichneten Betriebsmodus der Lüftungsvorrichtung (10) und in dem als Luftumwälzung und -erwärmung bezeichneten Betriebsmodus der Lüftungsvorrichtung (10) zu aktivieren.

4. Lüftungsvorrichtung (10) nach einem der Ansprüche 1 bis 3, **dadurch gekennzeichnet, dass** sie Mittel (7) zum Zirkulieren von Luft durch jeden der Kreisläufe umfasst.

5. Lüftungsvorrichtung (10) nach einem der Ansprüche 1 bis 4, **dadurch gekennzeichnet, dass** sie mindestens einen Filter (14) umfasst, der an der Stelle des Innenlufteinlasses (3) angeordnet ist.

6. Lüftungsvorrichtung (10) nach einem der Ansprüche 1 bis 5, **dadurch gekennzeichnet, dass** die Heizmittel (8) Heizmittel mit indirekter Verbrennung umfassen.

7. Lüftungsvorrichtung (10) nach Anspruch 6, **dadurch gekennzeichnet, dass** die Heizmittel (8) zur indirekten Verbrennung Gasheizmittel (13) umfassen.

8. Gebäude (90, 91) zur Geflügelzucht mit einer Vielzahl von Lüftungsvorrichtungen (10) zur Belüftung nach einem der Ansprüche 1 bis 7, wobei die Vorrichtungen an mindestens einer Längsseite des Gebäudes (90, 91) angeordnet sind, wobei das Gebäude außerdem mindestens eine Turbine oder einen Ventilator (20) zur Absaugung der Innenluft umfasst, die bzw. der an mindestens einem der Giebel des Gebäudes oder an mindestens einer Längsseite des Gebäudes angeordnet ist.

9. Gebäude (91) zur Geflügelzucht nach Anspruch 8, **dadurch gekennzeichnet, dass** die Lüftungsvorrichtungen (10) auf beiden Längsseiten des Gebäudes, einander gegenüberliegend oder versetzt, verteilt sind.

10. Gebäude zur Geflügelzucht nach Anspruch 8, **dadurch gekennzeichnet, dass** die Lüftungsvorrichtungen (10) und mehrere Turbinen oder Absaugventilatoren (20) abwechselnd auf einer Längsseite des Stalls verteilt sind.

11. Geflügelstall nach einem der Ansprüche 8 bis 10, umfassend eine Vielzahl von Belüftungsvorrichtungen (10) nach Anspruch 2 und gegebenenfalls einem der Ansprüche 3 bis 7, ferner mit einem Regelsystem (11) umfassend:
- mindestens einen Speicher für die Speicherung der altersabhängigen Lufterneuerungsbedarfe der Tiere,
- mindestens einen Sensor (C) zur Messung der Innentemperatur des Gebäudes, und
- eine Schnittstelle zur Steuerung jeder Lüftungsvorrichtung (10), die in Abhängigkeit der gemessenen Temperatur und der Bedarfe an Lufterneuerung den Betriebsmodus der Lüftungsvorrichtung (10) aus dem als Luftabsaugung bezeichneten Betriebsmodus, dem als Luftumwälzung und -erwärmung bezeichneten Betriebsmodus, dem als Wärmeaustausch und Luftabsaugung bezeichneten Betriebsmodus und den als Wärmeaustausch mit oder ohne Lufterwärmung bezeichneten Betriebsmodi auswählt.

12. Verfahren zur Verwendung mindestens einer Lüftungsvorrichtung (10) nach einem der Ansprüche 1 bis 7 innerhalb eines Gebäudes (90, 91) zur Geflügelzucht nach einem der Ansprüche 8 bis 11, wobei das Verfahren die folgenden Schritte umfasst:
- während einer ersten Phase der Tieraufzucht, der sogenannten endothermen Phase, Belüftung und Beheizung des Gebäudes mit Hilfe der mindestens einen Belüftungsvorrichtung (10); und
- während einer zweiten Phase der Tieraufzucht, der sogenannten exothermen Phase, Belüftung des genannten Geflügelgebäudes mithilfe der genannten mindestens einen Turbine oder des mindestens einen Absaugventilators (20), und Heizen des Gebäudes mithilfe der mindestens einen Lüftungsvorrichtung (10).

## Claims

1. A ventilation device (10), intended to equip a livestock building (90, 91), comprising a casing (1) and at least one heat exchanger block (4), the casing (1) being provided with an exterior air intake (2), a heated air outlet (2a), an interior air intake (3) and a cooled air outlet (3a),
said at least one heat exchanger block (4) being able to thermally contact a first flow (A) of air coming from the exterior air intake (2), and directed towards the heated air outlet (2a), with a second flow (B) of air coming from said interior air intake (3),
the ventilation device (10) further comprising an additional air outlet (5) disposed on said casing (1), air heating means (8) and deflection means capable of directing said second flow (B) of air entering at the location of said interior air intake (3):
- through said at least one exchanger block (4) towards said cooled air outlet (3a) according to a first air circuit (Cl),
- through a passage towards the heating means (8) and said heated air outlet (2a) according to a second air circuit (C2), or
- directly towards said additional air outlet (5) according to a third air circuit (C3),
said deflection means comprising:
- a first flap (6a) movable between a closed position and an open position of said exterior air intake (2),
- a second flap (6b) movable between a closed position and an open position of said additional air outlet (5), and
- a third flap (6c) movable between a closed position and an open position of the passage between said interior air intake (3) and said heated air outlet (2a) .

2. The ventilation device (10) according to claim 1, **characterised in that** it comprises means for moving each of said movable flaps (6a, 6b, 6c) between an open position and a closed position allowing:
- to open the second movable flap (6b) and close the first (6a) and third (6c) movable flaps in an operating mode called air extraction from said ventilation device (10),
- to open the third movable flap (6c) and close the first (6a) and second (6b) movable flaps in an operating mode called air recycling and heating of said ventilation device (10),
- to close the third movable flap (6c) and to open the first (6a) and second (6b) movable flaps in an operating mode called heat exchange and air extraction from said ventilation device (10),
- to close the second (6b) and third (6c) movable flaps and to open the first (6a) movable flap in operating modes called heat exchange with or without air heating of said ventilation device (10).

3. The ventilation device (10) according to claim 2, **characterised in that** it comprises means for activating/deactivating the heating means (8) capable of activating the latter in the operating mode called heat exchange with heating of said ventilation device (10) and in the operating mode called air recycling and heating of said ventilation device (10).

4. The ventilation device (10) according to one of claims 1 to 3, **characterised in that** it comprises means (7) for circulating air through each of said circuits.

5. The ventilation device (10) according to one of claims 1 to 4, **characterised in that** it comprises at least one filter (14) disposed at the location of the interior air intake (3).

6. The ventilation device (10) according to any one of claims 1 to 5, **characterised in that** the heating means (8) comprise indirect combustion heating means.

7. The ventilation device (10) according to claim 6, **characterised in that** the indirect combustion heating means (8) comprise gas heating means (13).

8. A poultry breeding building (90, 91) comprising a plurality of ventilation devices (10) according to one of claims 1 to 7, said devices being disposed on at least one longitudinal side of said building (90, 91), the building further comprising at least one turbine or exhaust fan (20) for indoor air located on at least one of the gables of said building or on at least one longitudinal side of said building.

9. The poultry breeding building (91) according to claim 8, **characterised in that** said ventilation devices (10) are distributed on the two longitudinal sides of the building, opposite each other or staggered.

10. The poultry breeding building according to claim 8, **characterised in that** said ventilation devices (10) and several turbines or exhaust fans (20) are distributed alternately on a longitudinal side of said building.

11. The poultry breeding building according to one of claims 8 to 10, comprising a plurality of ventilation devices (10) according to claim 2 and optionally one of claims 3 to 7, further having a regulation system (11) comprising:
- at least one memory for storing the air renewal needs of animals according to their age,
- at least one sensor (C) for measuring the interior temperature of said building, and
- a control interface for each ventilation device (10) which selects, depending on the measured temperature and the air renewal needs, the operating mode of the ventilation device (10) from the operating mode called air extraction operating mode, the operating mode called air recycling and heating operating mode, the operating mode called heat exchange and air extraction operating mode, and the operating modes called heat exchange with or without air heating.

12. A method for using at least one ventilation device (10) according to one of claims 1 to 7 within a poultry breeding building (90, 91) according to one of claims 8 to 11, the method comprising the following steps:
- during a first phase of animal breeding, called the endothermic phase, ventilating and heating said building using said at least one ventilation device (10); and
- during a second phase of animal breeding, called the exothermic phase, ventilating said poultry building using said at least one turbine or said at least one extraction fan (20), and heating said building using said at least one ventilation device (10).
